# EUROPEAN PATENT APPLICATION

(11) **EP 2 053 096 A2**
(43) Date of publication of application: **29.04.2009**
(21) Application number: 08167368.3
(22) Date of filing: 23.10.2008
(51) Int. Cl.: C09D 5/02, C09D 5/36

(54) **Sprayable surface repair compound**

(30) Priority: 23.10.2007 US 981923 P
(71) Applicant: Jig-A-World Inc,, Montreal, Québec H3K 2E3 (CA)
(72) Inventor: Matthews, Howard, Brampton, Ontario L6Z 1X4 (CA)
(74) Representative: Hatzmann, Martin

(57) **Abstract**

A sprayable surface repair compound is described including a filler, a diluent or diluents, a viscosity builder, a thickener, a film former, a functional extender, and a propellant.

## Description

### CROSS-REFERENCE TO RELATED APPLICATIONS

This application claims priority to and full benefit of U.S. provisional patent application number 60/981,923, filed October 23, 2007.

### FIELD OF THE INVENTION

The present invention relates generally to a sprayable surface repair compound. More particularly the present invention relates to a sprayable drywall repair compound or spackle or spackling.

### BACKGROUND OF THE INVENTION

A drywall repair or construction operation typically involves providing a thick wall (or ceiling) compound from a container and spreading the wall compound using a thin and wide blade onto a wall or ceiling to form a smooth joint. When the wall compound is sufficiently dry or cured, it may be sanded and if desired, may be primed and/or painted. A typical repair may involve the repair of a damages surface or hole.

One problem with typical wall repair or construction operations is that the necessity to provide the wall repair compound, blade, and sanding pad as three separate articles may lead to lost or misplaced items, such that the user may face inconvenience and may resort to performing the surface repair or construction in a substandard manner, for example by performing the job without the proper item or by substituting the missing item or item with a lesser item.

It is, therefore, desirable to provide a sprayable surface repair compound that may be sprayed onto an affected area for forming, for example with a tool, such as a putty knife, which may be provided in association with a container for the sprayable surface repair compound.

### SUMMARY OF THE INVENTION

It is an object of the present invention to obviate or mitigate at least one disadvantage of previous surface repair compounds.

In a first aspect, the present invention provides a sprayable surface repair compound comprising a filler, a diluent, a viscosity builder, a thickener, a film former, a functional extender, and a propellant.

The invention provides a sprayable surface repair compound, comprising: (a) a filler from about 25 to about 51 % w/w; (b) a diluent from about 25 to about 70% w/w; (c) a viscosity builder from about 0.1 to about 0.3% w/w; (d) a thickener from about 0.5 to about 6% w/w; (e) a film former up to about 15%; (f) a functional extender from about 5 to about 15%; and (g) a propellant from about 5 to about 35%.

Further, there is provided herein a method for preparation of a sprayable surface repair compound comprising the steps of: preparing a concentrate comprising: the filler, viscosity builder, thickener, film former, functional extended and diluent. The concentrate is adjusted with the diluent to have a viscosity of from 23,000 - 25,000 cps and a pH of 8.5 to 8.9; transferring the concentrate into an aerosol can; and sealing the aerosol can with propellant under pressure contained therein. The viscosity values mentioned in the present description and the appending claims are determined using a Brookfield viscometer, spindle RV #6 at a shear rate of 20 rpm at 20 °C.

### DETAILED DESCRIPTION

The invention provides a sprayable surface repair compound, comprising: (a) a filler from about 25 to about 51 % w/w; (b) a diluent from about 25 to about 70% w/w; (c) a viscosity builder from about 0.1 to about 0.3% w/w; (d) a thickener from about 0.5 to about 6% w/w; (e) a film former up to about 15%; (f) a functional extender from about 5 to about 15%; and (g) a propellant from about 5 to about 35%.

In a preferred embodiment, the invention provides a sprayable surface repair compound, wherein: (a) the filler comprises calcium carbonate; (b) the diluent comprises water; (c) the viscosity builder comprises a cellulosic polymer; (d) the thickener comprises attapulgite clay or a PEO thickener; (e) the film former comprises a vinyl acetate polymer; (f) the functional extender comprises perlite; and/or (g) the propellant comprises dimethyl ether.

The sprayable surface repair compound may include (a) the filler comprises about 34-40% w/w calcium carbonate; (b) the diluent comprises about 35 to 40% water; (c) the viscosity builder comprises about 0.1 - 0.3 % Cellosize^{™}; (d) the thickener comprises 4% attapulgite clay or PEO thickener; (e) the film former comprises about 11 % vinyl acetate polymer; (f) the functional extender comprises 10% expanded perlite; and/or (g) the propellant comprises about 12.5% dimethyl ether.

The sprayable surface repair compound may have a composition substantially as follows: calcium carbonate: 34-40 %; attapulgite or PEO thickener: 4%; vinyl acetate polymer: 11 %; Cellosize^{™}: 0.2 %; sodium benzoate: 0.05%; sodium nitrite 0.15 %; ammonium hydroxide: 0.2 %; expanded perlite: 8.8 %; water: 35-40%; and dimethylether as a propellant: 5-35 %, said compound having a pH of from about 8.5 to about 8.9.

The sprayable surface repair compound may additionally comprise one or more of the following: a vapour phase inhibitor, a pH modifier, a preservative, an anti-oxidant, an anti-fungal, or a humectant.

The sprayable surface repair compound may be one in which the vapour phase inhibitor is present in an amount of from about 0.1 to about 0.3% w/w, the pH modifier is present in an amount of from about 0.1 to about 0.3% w/w, the preservative is present in an amount of from about 0.03 to about 0.1 % w/w, the anti-oxidant is present in an amount of from about 0.10 to about 0.17% w/w, the anti-fungal is present in an amount of from about 0.01 to about 0.1 % w/w, or the humectant is present in an amount of from about 0.1 to about 0.3% w/w.

The sprayable surface repair compound may comprise calcium carbonate: 34-40 %; attapulgite: 4%; vinyl acetate polymer: 11 %; Cellosize^{™}: 0.2 %; sodium benzoate: 0.05%; sodium nitrite 0.15 %; ammonium hydroxide: 0.2 %; expanded perlite: 8.8 %; water: 35-40%; and dimethylether propellant: 5-35 %. This sprayable surface repair compound can optionally comprise morpholine as a vapour phase inhibitor, ammonium hydroxide as a pH modifier, sodium benzoate as a preservative, sodium nitrite as an anti-oxidant, Amical^{™} 48 as an anti-fungal, or Cellosize^{™} as a humectant.

Further, there is provided herein a method for preparation of a sprayable surface repair compound comprising the steps of: preparing a concentrate comprising: the filler, viscosity builder, thickener, film former, functional extended and diluent. The concentrate is adjusted with the diluent to have a viscosity of from 23,000 - 25,000 cps and a pH of 8.5 to 8.9; transferring the concentrate into an aerosol can; and sealing the aerosol can with propellant under pressure contained therein.

***Filler.*** A filler provides structure or "body" to the surface repair compound, and is the solid component present in the highest amount in the composition. In an exemplary embodiment of the invention, the filler is an ingredient containing substantially only calcium carbonate. This ingredient may have other inclusions, additives or impurities, but is nevertheless referred to herein as "calcium carbonate". The filler may be present in the surface repair compound in an amount of from about 25 to about 51 % (w/w). For example, a typical compound may contain 25-51 % calcium carbonate. As an exemplary level, from about 28 % to about 49 % (w/w) of a filler such as calcium carbonate may be included in the sprayable surface repair compound. An exemplary range of filler is 34-40% (w/w). A typical level of from about 38% to 41 %, or specifically about 40.5 % (w/w) calcium carbonate may be found in the compound. An exemplary source of calcium carbonate is from limestone.

While other components of the composition may also possess the typical properties of a filler, these components may also be designated for another specific purpose within the compound, in quantities smaller than the range noted herein for the filler. A person of skill in the art would understand the appropriate quantities to use of such components capable of acting as a filler, but which are noted elsewhere for use in lower quantities.

A typical calcium carbonate containing ingredient is Albagloss^{™} calcium carbonate (which may be obtained, for example, from Specialty Minerals Inc.). Other grades of purified calcium carbonate, which may be of a less pure and/or coarser grade could also be used.

***Diluent.*** A diluent is included in the sprayable surface repair compound in order to achieve an appropriate viscosity when the solid/dry components of the compound are mixed together. In an exemplary embodiment, the diluent (which may also be referred to as a solvent) comprises water. The diluent may include amounts of other polar non-aqueous solvents in combination with water. Thus, it is understood that the term diluent may refer to a mixture of different solvents used together. However, in general, water is the primary diluent used in the repair compound. A typical type of water used in the repair compound is distilled water. Other liquids or volatiles may be used in the compound, for example, solvents that are used as propellants are included in the repair compound, as described below. While such ingredients as propellants would also serve to dilute the dry/solid ingredients, they are categorized as separate ingredients. Further, it is to be understood that certain other ingredients in the compound may include water in the formulation. As an example of this, certain types of polymers are prepared in an aqueous solution. The water content of other ingredients is not included in the quantities outlined below, at which the diluent component is to be added.

The diluent is added to the repair compound in an amount that renders the repair compound flowable, although it maintains a relatively viscous consistency. This flowable yet viscous consistency permits the compound to be sprayed on an intended surface. A desired viscosity is achieved by adding the diluent and mixing until the appropriate viscosity is achieved. An exemplary viscosity of from about 20,000 - 30,000 (or 20M-30M) cps at 20 °C. A more specific range of viscosity that may be selected for the compound is from 23M-25M cps.

The sprayable surface repair compound contains from about 25 to about 70 % (w/w) diluent. An exemplary range of diluent is from 35-50% may be used. A more specific exemplary range is from 35 to 40% diluent, or specifically about 38%.

***Viscosity builder.*** An exemplary viscosity builder may have both filling and hardening properties in addition to the ability to increase viscosity and form a film. Cellosize^{™}, a hydroxyethyl cellulose polymer may be included in the composition as a thickener. A hydroxylethyl cellulose polymer is a water-soluble polymer that can serve to thicken, form films, and exhibit pseudoplastic behavior in solution. When present, a hydroxyethyl cellulose polymer may be present in an amount of from about 0.1 to about 0.3% (w/w), for example, Cellosize^{™} may be used at a level of from 0.13-0.22 % (w/w). A typical amount at which Cellosize^{™} is included is about 0.2% (w/w). Cellosize^{™} is a compound having other physical properties in addition to the thickening properties, such as the ability to cause or encourage film-forming behavior, or smoothness in the repair compound. Different grades or sizes of Cellosize^{™} may be obtained. One grade that works with the inventive compound is Cellosize^{™} QP 52,000 H, available from Dow. Cellosize^{™} has other properties which provide it with film forming and filler-type properties.

***Thickener.*** The compound includes one or more thickener. Typical thickeners may include clays, such as attapulgite clay, or polymers, such as cellulosic polymers. A further exemplary thickener is attapulgite clay. In one embodiment, the sprayable surface repair compound may contain from about 0.5 to about 6.0 % (w/w) attapulgite clay. Attagel^{™} 50, a silica-based product, may be used as a thickener. A level of about 4% attapulgite may be used. As an alternative to these, a polymeric thickener, such as a polyethylene oxide (PEO) thickener may be used. An exemplary thickener is Polyox^{™} resin (Dow) may be used, having a long-chain polymeric structure of polyethylene oxide, together with other ingredients. Should ingredients such as thickeners cause foaming, antifoaming agents can be used to decrease the foaming caused.

***Film Former.*** The compound contains a film former or "film binder" in an amount up to about 15%. As an example of a typical film former, a vinyl acetate polymer may be used. The sprayable surface repair compound in an exemplary embodiment contains up to about 15 % (w/w) vinyl acetate polymer. The vinyl acetate polymer may be a polymer or co-polymer of different types of vinyl acetate polymers. The specific compound to be used can be readily determined by observing the compound's ability to form films. The film former may comprise a level of about 11 % of a mixture of two different types of vinyl acetate polymers. Such polymers may include Rovace HP-2931 and/or Rovace 5140 (available from Rohm & Haas).

***Functional Extender.*** The functional extender included in the compound may comprise perlite, a naturally occurring siliceous rock. The compound may contain expanded perlite in an amount of from about 5 to about 15% (w/w). A more specific example of perlite quantity in the compound may be from 4.5% to 10.0% (w/w). An exemplary amount of perlite in the composition is 10% perlite.

***Propellant.*** A propellant is used in formation of the sprayable surface repair compound. Exemplary propellants include dimethyl ether, also referred to as DME, dimethyl oxide, or DMO. The sprayable surface repair compound may contain from about 5 to about 35% (w/w) of propellant, more specifically, from 10-20 % (w/w) of a propellant, or specifically, a propellant may be used in an amount of about 12.5%.

***Optional Ingredients.*** There are a number of ingredients that may be included in the composition that are optional, and may contribute specialized functions for a particular application. Such optional ingredients which may be included in the compound are a vapour phase inhibitor, a pH modifier, a preservative, an anti-oxidant (or corrosion inhibitor), an anti-fungal, or a humectant.

An exemplary vapour phase inhibitor is morpholine, amino methyl propanol, or other amine salts that can act to prevent corrosion in the headspace of the aerosol container. Such an ingredient may be present at an amount of from 0.1 to 0.3 % (w/w)

A pH modifier may be used to maintain alkalinity of the product. Ammonium hydroxide or sodium hydroxide, or any other base may be used to adjust and control pH as needed. Exemplary quantities included in the compound are from 0.1 to 0.3 %, for example a level of 0.2% may be used.

A preservative may be included in the compound. Sodium benzoate is the type of preservative that preserves substances within an aqueous medium. Levels ranging from 0.03 to 0.1, specifically 0.05% can be used in the compound,

An anti-oxidant, also referred to as a corrosion inhibitor, may be included in the compound. An exemplary anti-oxidant ingredient, such as sodium nitrite may be used in the compound. Other inorganic anti-oxidant-type salts may be used, provided these compounds possess the ability to accept an oxygen atom. Sodium nitrite may be included in an amount of from 0.10 to 0.17 % w/w, or more specifically, in an amount of about 0.15 % w/w. As a further corrosion inhibitor, a base could be used, such as ammonium hydroxide. This allows avoidance of corrosion within the container, as well as after application.

An anti-fungal ingredient may be used in the surface repair compound. This ingredient acts to prevent undesirable fungal growth. Such an anti-fungal ingredient may include Amical^{™} 48 (Dow) acts to extend the life and/or uses of the composition. This ingredient may be present in the compound at a level of from 0.01 - 0.1 % w/w, with a typical level being 0.05%.

A humectant can be included in the composition. Compounds capable of binding with water, such as polymers or clays can be used as a humectant ingredient. Advantageously, the presence of a humectant ensures that the compound does not dry too quickly. A slow, linear drying time may be desirable so that the compound dries in a smooth and uniform manner. Levels of 0.1 to 0.3 % w/w of an exemplary humectant such as Cellosize^{™} may be desirable in the compound.

***Preparation and Packaging.*** The ingredients noted above, including any desired optional ingredients, are combined and stirred to permit shear. The desired viscosity is achieved by adding quantities of diluent, such as water, while stirring, and by monitoring viscosity of the compound. When a desired viscosity is achieved, for example, about 23 M - 25 M cps, the concentrated compound is pumped into a can capable of aerosol application. Once the concentrate is in the aerosol can, a vacuum is applied to remove air and to reduce corrosion through removal of as much oxygen as possible. Once air is removed, a valve is crimped onto the can and the propellant component is then injected into the can. For example, a level of about 5 - 35 % w/w, for example 10 - 20 % w/w or specifically, 12.5 % w/w dimethyl ether is injected into a can.

The aerosol can now contains contents under pressure. Although further pressure could be applied, it is preferable to have a balance between adequate pressure to ensure appropriate directed (not generalized) spray evolves from the aerosol can when in use. This level propellant ensures that, upon actuation of the aerosol can, the content inside is capable of site-specific directed spray so as to spray into a small hole (possibly as small as holes with a diameter of ¼ inch), instead of on the sides and edges of a small hole. No extension tube is required using this compound, as the spray evolving from the aerosol nozzle can be directed to a specific small location without need of an extension tube. This provides one of the advantages of this sprayable compound over other non-sprayable compounds applied using a spreader, that reductions is waste, mess, and clean-up time are enjoyed.

***Properties.*** The sprayable surface repair compound of the present invention may be a viscous, sprayable, water soluble material. The compound may also be referred to as "dry wall viscosity builder". Advantageously, the sprayable surface repair compound may be applied into a small hole through direct application, without concern that excessive pressure within the container could cause generalized spraying onto regions outside of the hole to be filled.

The sprayable compound advantageously dries to form a smooth solid surface. Slower dying times can be experienced with increase quantities of humectant incorporated into the compound

The sprayable surface repair compound may be delivered by manual pump, electric or otherwise powered pump, or delivered by pressure for example pressurized air or other propellant. The sprayable surface repair compound may be delivered as particles suspended in a gas carrier (for example, as an aerosol). As an exemplary embodiment, an aerosol can is envisioned.

Other aspects and features of the present invention will become apparent to those ordinarily skilled in the art upon review of the following description of specific embodiments of the invention.

### EXAMPLE 1

An exemplary sprayable surface repair compound has a composition substantially as follows:

| | |
|---|---|
| Calcium carbonate: | 25-51 % (w/w) |
| Attapulgite or PEO thickener: | 1-6 % (w/w) |
| Vinyl acetate polymer: | 7-15 % (w/w) |
| Cellosize^{™} | 0.1-0.3 % (w/w) |
| Sodium benzoate | 0.03-0.1 % (w/w) |
| Sodium nitrite | 0.10-0.17 % (w/w) |
| Ammonium hydroxide | 0.1-0.3 % (w/w) |
| Expanded perlite | 4-15 % (w/w) |
| Water: | 25-70 % (w/w) |
| Dimethylether (Dimethyloxide): | 5-35 % (w/w) |

Specific exemplary quantities of ingredients relating to this embodiment of the sprayable compound are: Calcium carbonate: 35- 40 %; Attapulgite: 4%; Vinyl acetate polymer: 11 % ; Cellosize^{™}: 0.2 %; Sodium benzoate: 0.05%; Sodium nitrite 0.15 %; Ammonium hydroxide: 0.2 %; Expanded perlite: 10 %; Water: 35-40%; and Dimethylether propellant: 5-35 % (w/w). Optionally, morpholine is added at 0.15% and Amical^{™} 48 is added at 0.05%. All percentages are expressed on a weight per weight basis, relative to the final product including both water and propellant.

Dry ingredients are mixed and water is added to achieve a hydrated concentrate with a viscosity of 23,000 - 25,000 cps. The hydrated concentrate is pumped into aerosol cans. A vacuum is applied, and a valve is crimped onto each can. Following this, propellant DME is injected into each can, causing pressure within the can.

### EXAMPLE 2

An exemplary sprayable surface repair compound has a composition substantially as follows:

| | |
|---|---|
| Calcium carbonate: | 25-51 % (w/w) |
| Dimethylether (Dimethyloxide): | 8- 30 % (w/w) |
| Attapulgite: | 0.7-4.4 % (w/w) |
| Vinyl acetate polymer: | <7.5 % (w/w) |
| Cellosize^{™} | 0.13-0.22 % (w/w) |
| Sodium benzoate | 0.03-0.05 % (w/w) |
| Sodium nitrite | 0.10-0.17 % (w/w) |
| Ammonium hydroxide | 0.13-0.22 % (w/w) |
| Expanded perlite | 4.6-7.72 % (w/w) |
| Water: | Remainder (25-70%) |

Exemplary and preferable quantities of ingredients relating to this embodiment of the sprayable compound are provided below.

Preferably the sprayable surface repair compound contains about 26.7- about 45 % (w/w) water. More preferably the compound contains about 31.36 % (w/w) water. Preferably the water is deionized water.

Preferably the sprayable surface repair compound contains about 10- about 20 % (w/w) DME (dimethylether), also known as dimethyloxide. More preferably the compound contains about 11.82 % (w/w) dimethyether.

Preferably the sprayable surface repair compound contains about 3 - about 4 % (w/w) attapulgite. More preferably the compound contains about 3.52 % (w/w) attapulgite. An exemplary type of attapulgite is Attagel^{™} 50.

Preferably the sprayable surface repair compound contains about 3.5- about 6.9 % (w/w) vinyl acetate polymer latex emulsion. More preferably the compound contains about 5.94 % (w/w) vinyl acetate polymer latex emulsion. An exemplary emulsion is Rhoplex^{™} WL-91, 41.5% (Rhom & Haas).

Preferably the sprayable surface repair compound contains about 0.15- about 0.20 % (w/w) Cellosize^{™}. More preferably the compound contains about 0.18 % (w/w) Cellosize^{™}, a form of hydroxy ethyl cellulose.

Preferably the sprayable surface repair compound contains about 0.038-about 0.052 % (w/w) sodium benzoate as a preservative. In particular, a level of about 0.0441 % (w/w) sodium benzoate may be used.

Preferably the sprayable surface repair compound contains about 0.11- about 0.15 % (w/w) sodium nitrite. Sodium nitrite may be used as a corrosion inhibitor, especially when the compound is in a concentrated liquid phase. More preferably, the compound contains about 0.1323 % (w/w) sodium nitrite.

Preferably the sprayable surface repair compound contains about 0.15- about 0.20 % (w/w) ammonium hydroxide. This ammonium hydroxide may be in a liquid form, and can serve as a vapour phase corrosion inhibitor. More preferably the compound may contain about 0.1764 % (w/w) ammonium hydroxide. Preferably the ammonium hydroxide is liquid ammonium hydroxide.

Preferably the sprayable surface repair compound contains about 5.25- about 7.10 % (w/w) expanded perlite. More preferably, the compound contains about 6.1726 % (w/w) expanded perlite.

Preferably the sprayable surface repair compound contains about 0.11- about 0.15 % (w/w) morpholine. In this example, morpholine is used as a vapour phase corrosion inhibitor. In a specific embodiment, the compound contains about 0.1323 % (w/w) morpholine.

Optionally, the sprayable surface repair compound further includes mica at a level of up to about 7.0 % (w/w) as a viscosity builder and hardener, and an exemplary level of up to about 3.5% is envisioned.

The sprayable compound may also include crystalline silica at a level of up to about 1.4 % (w/w), to promote durability. A typical level of silica may be up to about 0.7 % (w/w) silica.

The exemplary sprayable surface repair compound may containing substantially 40.5 % (w/w) calcium carbonate in the form of limestone (Albagloss^{™} tech). As an alternative to this, Vicron® may be used (available from Mineral Technologies).

In order to prepare the compound, an initial mixture of non-volatile ingredients is prepared. This is referred to as a "concentrate", which must later be diluted in order to achieve an appropriate aerosol form. This concentrate represents about 60% of the final weight of the compound, given the ingredients outlined above. The ingredients are mixed to achieve a smooth and uniform paste consistency. Mixing may occur for as long as required to meet the desired consistency, for example, for one hour, and optionally heated at 115 °C. Heating of the water may permit more effective mixing, but it is not required. The viscosity of the diluted concentrate (once water is added) is adjusted to be about 20M-30M cps at 20 °C, preferably about 23M-25M cps. The concentrate has a pH of from 8.3 to 8.3, and the pH of a 10% concentrate solution is about 8.5 to 8.9.

### EXAMPLE 3

An sprayable surface repair compound is prepared having a composition substantially as follows:

| | **% (w/w)** |
|---|---|
| CellosizeT^{M} (hydroxy ethyl cellulose), QP-52,000 H | 0.17636 |
| Sodium benzoate, (preservative) | 0.04409 |
| Sodium nitrite (corrosion inhibitor) For concentrate liquid phase | 0.13227 |
| Morpholine (vapour phase corrosion inhibitor) | 0.13227 |
| Liquid ammonium hydroxide (vapour phase corrosion inhibitor) | 0.17636 |
| Attapulgite (Attagel^{™} 50) | 3.52720 |
| Calcium carbonate (limestone) Albagloss^{™} tech | 40.50993 |
| Vinyl acetate polymer latex emulsion (Rhoplex^{™} WL-91, 41.5%) | 5.94810 |
| Expanded perlite | 6.17260 |
| DME (dimethylether) | 11.8200 |
| Deionized water | Remainder |

Preferably the sprayable surface repair compound is formulated from a sprayable surface repair compound concentrate. The concentrate having substantially the following characteristics, and is prepared as noted.

| | |
|---|---|
| % Non-volatile (Concentrate only) | 59-61 %, 1 hour at 115°C |
| Viscosity of concentrate | 20M-30M cps @ 20°C |
| pH of concentrate | 8.30-8.70 |
| pH of 10% concentrate solution | 8.50-8.90 |

Preferably the sprayable surface repair compound concentrate and a diluent or solvent or propellant, such as water and/or dimethylether are combined or mixed to form the sprayable surface repair compound.

### EXAMPLE 4

An exemplary sprayable surface repair compound may have the following composition, in which each component is noted in approximate amounts: about 31.36 % (w/w) deionized water; about 0.18 % (w/w) Cellosize^{™}; about 0.04 % (w/w) sodium benzoate; about 0.13 % (w/w) sodium nitrite; about 0.13 % (w/w) morpholine; about 0.18 % (w/w) liquid ammonium hydroxide; about 3.53 % (w/w) attapulgite; about 40.51 % (w/w) calcium carbonate; about 5.95 % (w/w) vinyl acetate polymer latex emulsion; about 6.17 % (w/w) expanded perlite; and about 11.82 % (w/w) dimethylether.

In the preceding description, for purposes of explanation, numerous details are set forth in order to provide a thorough understanding of the embodiments of the invention. However, it will be apparent to one skilled in the art that these specific details are not required in order to practice the invention.

The above-described embodiments of the invention are intended to be examples only. Alterations, modifications and variations can be effected to the particular embodiments by those of skill in the art without departing from the scope of the invention, which is defined solely by the claims appended hereto.

## Claims

1. A sprayable surface repair compound, comprising:
(a) a filler from about 25 to about 51 % w/w;
(b) a diluent from about 25 to about 70% w/w;
(c) a viscosity builder from about 0.1 to about 0.3% w/w;
(d) a thickener from about 0.5 to about 6% w/w;
(e) a film former up to about 15%;
(f) a functional extender from about 5 to about 15%; and
(g) a propellant from about 5 to about 35%.

2. The sprayable surface repair compound of claim 1, wherein:
(a) the filler comprises calcium carbonate;
(b) the diluent comprises water;
(c) the viscosity builder comprises a cellulosic polymer;
(d) the thickener comprises attapulgite clay or a PEO thickener;
(e) the film former comprises a vinyl acetate polymer;
(f) the functional extender comprises perlite; and/or
(g) the propellant comprises dimethyl ether.

3. The sprayable surface repair compound of claim 1, wherein:
(a) the filler comprises about 34-40% w/w calcium carbonate;
(b) the diluent comprises about 35 to 40% water;
(c) the viscosity builder comprises about 0.1 - 0.3 % Cellosize^{™};
(d) the thickener comprises 4% attapulgite clay or PEO thickener;
(e) the film former comprises about 11 % vinyl acetate polymer;
(f) the functional extender comprises 10% expanded perlite; and/or
(g) the propellant comprises about 12.5% dimethyl ether.

4. The sprayable surface repair compound of claim 1, having a composition substantially as follows: calcium carbonate: 34- 40 %; attapulgite or PEO thickener: 4%; vinyl acetate polymer: 11 % ; Cellosize^{™}: 0.2 %; sodium benzoate: 0.05%; Sodium nitrite 0.15 %; Ammonium hydroxide: 0.2 %; expanded perlite: 8.8 %; water: 35-40%; and dimethylether as a propellant: 5-35 %,
said compound having a pH of from about 8.5 to about 8.9.

5. The sprayable surface repair compound of claim 1, additionally comprising one or more of the following: a vapour phase inhibitor, a pH modifier, a preservative, an anti-oxidant, an anti-fungal, or a humectant.

6. The sprayable surface repair compound of claim 5, wherein:
the vapour phase inhibitor is present in an amount of from about 0.1 to about 0.3% w/w,
the pH modifier is present in an amount of from about 0.1 to about 0.3% w/w,
the preservative is present in an amount of from about 0.03 to about 0.1 % w/w,
the anti-oxidant is present in an amount of from about 0.10 to about 0.17% w/w,
the anti-fungal is present in an amount of from about 0.01 to about 0.1 % w/w, or
the humectant is present in an amount of from about 0.1 to about 0.3% w/w.

7. The sprayable surface repair compound according to claim 1, having a composition comprising: calcium carbonate: 34- 40 %; attapulgite: 4%; vinyl acetate polymer: 11 % ; Cellosize^{™}: 0.2 %; sodium benzoate: 0.05%; sodium nitrite 0.15 %; ammonium hydroxide: 0.2 %; expanded perlite: 8.8 %; water: 35-40%; and dimethylether propellant: 5-35 %.

8. The sprayable surface repair compound according to claim 7, additionally comprising morpholine as a vapour phase inhibitor, ammonium hydroxide as a pH modifier, sodium benzoate as a preservative, sodium nitrite as an anti-oxidant, Amical^{™} 48 as an anti-fungal, or Cellosize^{™} as a humectant.

9. A method for preparation of a sprayable surface repair compound according to claim 1 comprising the steps of:
preparing a concentrate comprising: the filler, viscosity builder, thickener, film former, functional extended and diluent, said concentrate having a viscosity of from 23,000 - 25,000 cps and a pH of 8.5 to 8.9;
transferring the concentrate into an aerosol can; and
sealing the aerosol can with propellant under pressure contained therein.
